(19) Europäisches Patentamt
European Patent Office
Office européen des brevets

(11) EP 1 149 803 A1

# (12) EUROPEAN PATENT APPLICATION

(43) Date of publication:
**31.10.2001 Bulletin 2001/44**

(51) Int Cl.$^7$: **C02F 1/46**

(21) Application number: **00118934.9**

(22) Date of filing: **01.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.04.2000 RU 2000110018**

(71) Applicant: **EVO Umwelt-Wasserreinigungstechnik GmbH
27777 Ganderkesee (DE)**

(72) Inventor: **Chebanov, Serguei
109441 Moskow (RU)**

(74) Representative: **Eisenführ, Speiser & Partner
Martinistrasse 24
28195 Bremen (DE)**

## (54) Process for comprehensive decontamination of water

(57) Comprehensive purification of ground water and/or mine water, and/or wastewater of various origin aimed at removing impurities of heavy metal, arsenic, organic contaminants and radioactive species is carried out in the field of galvanic cell comprising metal alloy and/or metal mixture with a variety of carbon-containing materials with further separation of settled materials of the galvanic cell and precipitation of contaminants.

Beneficial features of the process are technological simplicity, cost-effectiveness, environmental safety and high performance.

EP 1 149 803 A1

## Description

This invention relates to processes for decontamination of sewage water, wastewaters, industrial effluents, mine and ground waters contaminated with heavy metal and arsenic compounds, radioactive species and organic impurities.

It has previously been proposed to comprehensively treat waste solutions contaminated with organic impurities, sulfate, ammonium, nitrite, nitrate, arsenate and/or cyanide ions as well as ions of heavy metals and radioactive elements (WO 95/14368) [1]. Complex purification according to said method is provided by passing the contaminated effluents through a system of biobasins filled with a supporting layer consisting of broken carbonate rocks, iron, and organic carbon source, all disposed on the basin's bottom, in combination with a planted bacterial culture. The wastewater is fed under conditions of vigorous continuous agitation.

The process implies involvement of a large number of reactors since the rate of biochemical reactions is rather low and, consequently, the process is excessively metal-consuming one. Apart from that, the process can only be embodied subject to admixture of a product obtained through a combination of activated sludge from the biobasins of purifying municipal sewage plant and mixed culture of anaerobic microorganisms isolated from the sludge of the polluted water accepting basin. Sediments of the kind are characterized by inconstancy of their composition, which is a restricting factor for practical adoption of such method. As to conveyance of the sediments to water treatment plant site, it would be an environmentally unsafe affair.

Technique proposed in EP 0240985, Int.Cl. G21F 9/10, 07.04.87 [2] for removal of heavy metals, radioactive isotopes and organic contaminants from natural water and wastewaters comprises precipitation of said impurities with the aid of carboxymethylcellulose or water-insoluble salts thereof. Calcination of the precipitated material can evoke reduction of heavy metal oxides to environmentally unsound volatile compounds. Measures aimed at their trapping would bring about a considerable rise in cost of the process.

Another proposed solution to remove heavy metals and arsenic from wastewaters resides in a multistage process comprising deflocculation of the contaminants, followed by settling thereof in the form of solid material under action of chalk and, lastly, separation of thus settled solid material. The core peculiarity of this method lies with the contaminants getting precipitated under action of calcium hydride phosphate formed *in situ* (WO 93/12041, Int.Cl. C02F 1/52, 24.06.93 [3]. This method is useful for extracting of nickel, copper, cadmium, chromium, zinc, lead, manganese, arsenic, mercury from wastewater streams with the resultant considerable lowering of organic impurities content in the treated water.

The process is associated with such disadvantage as high demand in calcium hydroxide to be consumed which component generates, at wastewater processing, the corresponding amount of sludge inapplicable for further utilization. Burial of the solid wastes in large amounts would inflict both economic and environmental embarrassments.

Decontamination of ground waterto remove heavy metal impurities and radioactive species therefrom up to the grade of potable water as proposed in EP 0618592, Int.Cl. G21F 9/10, [4] is effected by treating the water with silicates like sodium silicate, potassium silicate or tetramethylorthosilicate in combination with ammonium hydroxide with a view to precipitating said contaminants. The resultant mixture is then brought to pH value ranging within 5-9.5 by acid addition thereto and, having allowed mixture to stand, the cleansed stream in separated from the precipitate.

To provide conditions for precipitation of sludge, the above patent envisions application of ammonium hydroxide solutions. So long as ammonium cation remains in the water after the sludge has settled, its extraction is a more complicated problem than removal of heavy and radioactive elements.

It has been suggested that wastewaters resulting from galvanic processes can be decontaminated by double-step treatment (Patent of Russia 2061660, Int.Cl. C02F 1/463, 02.11.92 [6].

The particularity of method [6] consists in the first-step cleansing with the aid of element consisting of mixed iron and copper chips at pH 2.0-5.0 followed by gravity sedimentation in the presence of polyacrylamide, pH value being 8.9-9.3, and separation of the resultant sediment; the second-step treatment comprising the use of aluminium and copper chips, gravity sedimentation at pH 6.5-7.0. Such method is useful for removing chromium, zinc, copper, nickel, cadmium, iron, ammonium ions as well as organic impurities (petroleum products) from wastewaters. Residual impurity content makes: Cr - 0.05; Fe - 0.35; Cu - 0.5.

This solution to a certain extent overcomes drawbacks of the prior art, in particular such method is more universal and allows for higher degree of purification. Embodying of the method, however, implies application of copper and polyacrylamide, expensive and environmentally non-friendly substances. Copper additions indispensable as well at the second step of the process provoke formation of sludge which is hard to dispose of since it is a mixture of organic compounds and heavy metals. Apart from that, hydrochloric acid needed for embodying the prior art process implicates stringent requirements to corrosion resistance properties of structural materials the equipment is made of.

Accordingly, an object of the present invention is to provide a high-performance, cost-effective, easy-to-operate and environmentally more acceptable method of treating ground water and/or wastewater streams of various origin and radioactive contaminants therefrom.

This objective has been found attainable through application of the present invention that provides a process for comprehensive decontamination of ground water and/or mine water, and/or wastewater of various origin by removing heavy metal and/or arsenic ions, and/or organic, and/or radioactive contaminants therefrom, which process comprises the steps of treating contaminated water in the field of galvanic cell followed by settling and then separating the resultant sediment; precipitating said contaminants and separating the cleansed water from precipitate bearing said contaminants; said process being characterized in that the galvanic cell applied comprises a mixture of alloy, and/or metal, and/or metals having normal electrolytic potential exceeding -2.5V with graphitized carbon-containing material and/or schungite, and/or naturally-occurring graphite, and/or coke, and/or heat-treated peat, and/or heat-treated bituminous sand; the treated water is separated from materials of galvanic cell; the contaminants are precipitated while controlling pH in accordance with qualitative composition of contaminants in the water subjected to decontamination In the preferred embodiment of this invention the material standing duty as said galvanic cell comprises carbon-containing alloy, carbon content therein being at least 2%, graphitized heavy petroleum residue, coal, wastes of metalworking plants and metallurgical works containing carbon, metal and slag, aluminium alloys, and/or alloys of zinc, tin lead, manganese, magnesium, cobalt, and/or nickel. The contaminants are preferably precipitated while controlling pH accordance with formula:

$$= 11.5 + \lg \left( \sum_{i=1}^{N_n} \nu_i C_i + \sum_{j=1}^{N_o} C_j \right) \pm 1.7$$

where:

$_i$- is molar concentration of i inorganic contaminant, (ion);
$_i$- is ion's charge;
$N_n$ - is number of inorganic contaminants;
$_j$ - is molar concentration of organic contaminants;
$N_0$ - is number of organic contaminants of the treated water,

Metal applicable as material for the galvanic cell can also be conveniently selected from the mixtures of magnesium, aluminium, manganese, zinc, iron, cobalt, nickel, tin, lead.

By way of carbon-containing material of the galvanic cell use may be made of graphites of natural and/or artificial origin, and also heat-treated coke, and/or schungite, and/or chaoit, and/or carbon-containing alloys, such as cast irons, also containing graphite, and/or wastes of metallurgical works, and/or products of heat treatment of bituminous sands, and/or oil-bituminous rocks, and/or peat, and/or wastes available at synthetic resin production plants and refineries.

Carbon-containing materials suitable for embodying the present invention are defined as follows:

- schungites - rocks in non-crystalline or graphitoid state, carbon content therein ranging from 5 to 99%. Apart from carbon content, they differ in the components breakdown of their mineral bases - aluminosilicate, siliceous, carbonate;
- chaoit - natural mineral of crystalline carbon.

Galvanic cell proposed according to the invention is a kind of device comprising a mixture of metal alloy and/or mixture of metals with the foregoing carbon materials put into electrolyte whose duty is stood by the treated water with therein dissolved salts of metals, arsenic and other impurities.
The technique disclosed in the present invention enables for decontamination of ground water and/or wastewater streams by removing on the average 98.5% of heavy metal impurities, 99.5% of arsenic impurities, 97.9% of radioactive species, and 97.5% of organic contaminants therein contained.

Beneficial features of the process are technological simplicity and cost-effectiveness. As distinct from the prior art method this process poses no environ-mental-safety problems.

The ability to accomplish decontamination of water streams using the method of this invention is illustrated in the following examples in terms of specific embodiments.

Examples 1-15

Subjected to treatment in Example 2 is a sample of mine water, Examples 4, 9, 10, 12 illustrate treatment of ground water samples, the rest of them refer to wastewaters of various origin.

100 ml of water bearing a variety of contaminants are introduced into a field of galvanic cell consisting of galvanic cell materials of Table 1 and Table 2 taken in definite proportions to there vigorously agitated during 8 hours, after that water is decanted and pH calculated by formula:

$$= 11.5 + \lg\left(\sum_{i=1}^{N_n} \nu_i C_i + \sum_{j=1}^{N_o} C_j\right) \pm 1.7$$

where:

$_i$- is molar concentration of i inorganic contaminant, (ion);
$_i$- is ion's charge;
$N_n$ - is number of inorganic contaminants;
$_j$ - is molar concentration of organic contaminants;
$N_O$ - is number of organic contaminants of the treated water,

pH is then brought to the calculated value and the water stream is filtered to be isolated from the obtained precipitate. Initial composition of water subjected to decontamination as applied to each of the Examples is specified in Table 3, decontamination conditions are given in Table 4 and the comprehensive decontamination results - Table 5.

Compared to the prior art method the process disclosed herein is advantageous for its multi-purpose applicability since it is useful for removing a wide range of heavy metal and arsenic contaminants, organic impurities and radioactive species. Furthermore, the proposed water treatment technique is cost-effective, easy-to-operate and environmentally safe. Industrial application of the proposed method would not be calling for large capital investments; implementation of the process is based on engagement of easily accessible mass-production equipment and materials standing duty as the galvanic cell.

Table 1

Materials of Galvanic Cell Used for Contaminated Water Treatment

| Example No. | Material I of galvanic cell | Material II of galvanic cell (Table 2) | Weight ratio of galvanic cell materials I to II |
|---|---|---|---|
| 1. | Wrought alumomagnesium alloy (Al 99.2% +Mg 0.8%) | 1. | 1:1 |
| 2. | Wrought alumomagnesium alloy (93.1%Al + 6.3%Mg + 0.6%Mn) | 2. | 1:2 |
| 3. | Ternary alloy (92.5% Al + 4.2%Mg + 3.3% Zn) | 3. | 1:3 |
| 4. | Cast ternary alloy of aluminium-zinc-silicon (94% Al ÷ 4% Zn + 2% Si) | 4. | 1:1 |
| 5. | Zinc-magnesium mixture (70%Zn÷ 30% Mg) | 5. | 1:2 |
| 6. | Cast zinc alloy (78% Zn+ 22% Al) | 6. | 1:3 |
| 7. | Magnesium-manganese mixture (60%Mg+ 40% Mn) | 7. | 1:1 |
| 8. | Cast alloy of magnesium with aluminium, manganese and zinc (91%Mg ÷ 6% Al ÷ 0,5% Mn+ 2,5%Zn) | 8. | 1:2 |
| 9. | Alloy of aluminium and nickel (2% Al + 2% Mn+ 96% Ni) | 9. | 1:3 |
| 10. | Aluminium-containing pig iron (Al>5%) | 10. | 1:1 |
| 11. | Mixture of iron with aluminium (90% Fe ÷ 10% Al) | 11. | 1:2 |
| 12. | Half-and-half mixture of cast alloy of magnesium-aluminium-manganese (91.3%Mg ÷ 8% Al + 0.2% Mn÷ 0.5%Zn) ÷ 50% Fe | 12. | 1:3 |

Table 1 continued

| Example No. | Material I of galvanic cell | Material II of galvanic cell (Table 2) | Weight ratio of galvanic cell materials I to II |
|---|---|---|---|
| 13. | Mixture of pig iron (80%) and zinc (20%) | 13. | 1:1 |
| 14. | Mixture of metals: 30%Al + 30% Zn + 40%Fe | 14. | 1:2 |
| 15. | Mixture of metals: 10% Al + 10% Mn + 10% Ni + 70%Fe | 15. | 1:3 |

Table 2

Carbon Materials of Galvanic Cell

| Item | Description of material | Density, t/m³ | Ash content, % |
|---|---|---|---|
| 1. | 70 wt.% of natural graphite + 30 wt.% of | 2.08 | 10.10 |
| 2. | natural graphite | 2.19 | 7.30 |
| 3. | Industrial graphite | 1.65 | 0.32 |
| 4. | Schungite | 1.72 | 12.00 |
| 5. | Graphitized bituminous sand | 2.31 | 70.00 |
| 6. | Graphitized bottom residue resulting from straight-run oil refining | 1.30 | 1.60 |
| 7. | 20 wt.% of graphitized peat + 80 wt.% of shale coke | 1.42 | 0.70 |
| 8. | Graphitized residue of polyethylene production process | 1.47 | 0.60 |
| 9. | Graphitized natural oil-bituminous rocks | 2.14 | 56.00 |
| 10. | Blast-furnace process wastes containing (in wt.%): 35 pig iron, 20 graphite an45 slag | 4.30 | 82.00 |
| 11. | 90 of pitch coke + 10 wt.% of graphitized bituminous sand | 1.80 | 5.00 |

Table 2 continued

| Item No. | Description of material | Density, $t/m^3$ | Ash content, % |
|---|---|---|---|
| 12. | Coal | 1.57 | 1.10 |
| 13. | Graphitized residue of thermal cracking process | 1.36 | 0.70 |
| 14. | Shale coke | 1.45 | 3.50 |
| 15. | 80 wt.% of coke from decelerated coking process + 20 wt.% of coal | 1.69 | 7.00 |

Table 3

Analysis of Water Samples Subjected to Comprehensive Decontamination

| Contaminants | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| | Initial content of contaminants in water, mg/l | | | | | | | | | | | | | | |
| arsenic | 2.4 | 30.4 | | | | | 3.4 | 2.4 | 30.4 | 32.8 | | | | | 3.4 |
| chromium | 10.3 | 8.9 | | | | | 5.1 | 10.3 | 8.9 | 19.2 | | | | | 5.1 |
| ammonium | | 3.7 | | | | | | | 3.7 | 3.7 | | | | | |
| cadmium | | 0.6 | | | | | | | 0.6 | 0.6 | | | | | |
| lead | | 0.4 | | | | | | | 0.4 | 0.4 | | | | | |
| sulfate | | | 120.0 | | | | | | | | 120.0 | | | | |
| nickel | | | 1.4 | | | | | | | | 1.4 | | | | |
| cobalt | | | 2.6 | | | | | | | | 2.6 | | | | |
| molybdenum | | | 0.8 | | | | | | | | 0.8 | | | | |
| nitrate | | | 23.0 | | | | | | | | 23.0 | | | | |
| uranium | | | | 1.9 | | | | | | | | 1.9 | | | |
| radium[a] | | | | 1.1 | | | | | | | | 1.1 | | | |
| - active substance (total)[a] | | | | | | | | | | | | 2.3 | | | |

Table 3 continued

| Contaminants | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| | **Initial content of contaminants in water. mg/l** | | | | | | | | | | | | | | |
| ethylene dichloride | | | | | 23.0 | | | | | | | | 23.0 | | |
| chloro-IPCPC | | | | | 78.0 | | | | | | | | 78.0 | | |
| dichloralurea** | | | | | 34.0 | | | | | | | | 34.0 | | |
| diuron*** | | | | | | 12.1 | | | | | | | | 12.1 | |
| TC**** | | | | | | | 5.6 | | | | | | | | 5.6 |

*- chloro-IPCPC is Isopropyl-N-3-chlorophenylcarbamate; **- dichloralurea is N,N' -Di-(2,2,2-trichloro-1-oxyethyl)urea; *** - diuron is N-3,4-Dichlorophenyl-N', N' -dimethylurea; ****- TCA is sodium trichloroacetate.

- concentration is given in Bk/l; - concentration is given in μg/l.

Table 4

| Conditions of Comprehensive Decontamination of Various Water Streams | | | |
|---|---|---|---|
| Example No. | Galvanic Cell material of Table 1 | Galvanic Cell material of Table 2 | Weight ratio of water to galvanic cell materials |
| 1. | 1. | 1. | 1000:1 |
| 2. | 2. | 2. | 500:1 |
| 3. | 3. | 3. | 100:1 |
| 4. | 4. | 4. | 800:1 |
| 5. | 5. | 5. | 500:1 |
| 6. | 6. | 6. | 100:1 |
| 7. | 7. | 7. | 50:1 |
| 8. | 8. | 8. | 700:1 |
| 9. | 9. | 9. | 400:1 |
| 10. | 10. | 10. | 500:1 |
| 11. | 11. | 11. | 200:1 |
| 12. | 12. | 12. | 10:1 |
| 13. | 13. | 13. | 300:1 |
| 14. | 14. | 14. | 250:1 |
| 15. | 15. | 15. | 600:1 |

Table 5

Analysis of Water Samples Subjected to Comprehensive Decontamination

| Contaminants | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| | **Final content of contaminants in water, mg/l** | | | | | | | | | | | | | | |
| arsenic | 0.01 | 0.400 | | | | | 0.05 | 0.02 | 0.040 | 0.090 | | | | | 0.12 |
| chromium | 0.30 | 0.080 | | | | | 0.07 | 0.12 | 0.030 | 0.100 | | | | | 0.06 |
| ammonium | | 0.520 | | | | | | | 0.480 | 0.040 | | | | | |
| cadmium | | 0.012 | | | | | | | 0.011 | 0.020 | | | | | |
| lead | | 0.005 | | | | | | | 0.005 | 0.007 | | | | | |
| sulfate | | | 73.20 | | | | | | | | 69.10 | | | | |
| nickel | | | 0.04 | | | | | | | | 0.05 | | | | |
| cobalt | | | 0.03 | | | | | | | | 0.03 | | | | |
| molybdenum | | | 0.05 | | | | | | | | 0.06 | | | | |
| nitrate | | | 19.40 | | | | | | | | 23.00 | | | | |
| uranium | | | | 0.002 | | | | | | | | 0.08 | | | |
| radium[a] | | | | 0.030 | | | | | | | | 0.04 | | | |
| - active substance (total)[a] | | | | | | | | | | | | 0.01 | | | |

Table 5 continued

| Contaminants | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| | **Final content of contaminants in water, mg/l** | | | | | | | | | | | | | | |
| ethylene dichloride | | | | | 1.08 | | | | | | | | 0.91 | | |
| chloro-IPCPC | | | | | 6.70 | | | | | | | | 5.20 | | |
| dichloralurea** | | | | | 0.40 | | | | | | | | 0.30 | | |
| diuron*** | | | | | | 0.15 | | | | | | | | 0.08 | |
| TC**** | | | | | | | 0.08 | | | | | | | | 0.05 |
| Percentage of contaminants removed | 97.6 | 97.7 | 97.3 | 99.9 | | | 98.6 | 98.9 | 98.9 | 99.5 | 37.6 | 95.8 | | | 97.9 |
| | | | | 97.3 | | | | | | | | 98.6 | | | |
| | | | | | 93.9 | 98.7 | 98.6 | | | | | | 95.3 | 99.3 | 99.1 |

*- chloro-IPCPC is Isopropyl-N-3-chlorophenylcarbamate; **- dichloralurea is N,N'–Di-(2,2,2-trichloro-1-oxyethyl)urea; *** - diuron is N-3,4-Dichlorophenyl-N', N' –dimethylurea; ****- TCA is sodium trichloroacetate.

- concentration is given in Bk/l; - concentration is given in µg/l; c – level of contaminants removed is expressed in total per cent of contaminants got withdrawn relative to total initial content of contamination in water.

**Claims**

1. A process for comprehensive decontamination of ground water and/or mine water, and/or wastewater of various origin by removing heavy metal and/or arsenic ions, and/or organic, and/or radioactive contaminants therefrom, which process comprises the steps of treating contaminated water in the field of galvanic cell followed by settling and then separating the resultant sediment; precipitating said contaminants and separating the cleansed water from precipitate bearing said contaminants; said process being **characterized in that** the galvanic cell applied comprises a mixture of metal alloy and/or metal, and/or a mixture of metals having normal electrolytic potential exceeding -2.5V with graphitized carbon-containing material and/or schungite, and/or naturally-occurring graphite, and/or coke, and/or heat-treated peat, and/or heat-treated bituminous sand; the treated water is separated from materials of galvanic cell; the contaminants are precipitated while controlling pH in accordance subjected to decontamination.

2. The process of claim 1 wherein **characterized in that** the galvanic cell applied comprises carbon-containing metal alloy containing at least 2% of carbon.

3. The process of claims 1 or 2 **characterized in that** the galvanic cell applied comprises graphitized heavy petroleum residue.

4. The process of claim 1 **characterized in that** the galvanic cell applied comprises coal.

5. The process of claim 1 **characterized in that** the galvanic cell applied wastes of metalworking plants and metallurgical works containing carbon, metal and slag.

6. The process of claim 1 **characterized in that** the galvanic cell applied comprises aluminium alloys and/or alloys of zinc, and/or tin, and/or manganese, and/or magnesium, and/or cobalt, and/or nickel.

7. The process of claim 1 **characterized in that** the contaminants are precipitated while controlling pH in accordance with formula:

$$= 11.5 + \lg \left( \sum_{i=1}^{N_n} \nu_i C_i + \sum_{j=1}^{N_o} C_j \right) \pm 1.7$$

where:

i- is molar concentration of i inorganic contaminant, (ion);
i- is ion's charge;
$N_n$ - is number of inorganic contaminants;
j - is molar concentration of organic contaminants;
$N_O$ - is number of organic contaminants of the treated water.

European Patent Office

# EUROPEAN SEARCH REPORT

Application Number
EP 00 11 8934

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| A | US 3 392 102 A (KOCH RUDOLF)<br>9 July 1968 (1968-07-09)<br>ESPECIALLY COLUMN3, LINES 38-40<br>--- | 1 | C02F1/46 |
| A | US 3 784 014 A (TURNER A)<br>8 January 1974 (1974-01-08)<br>* the whole document *<br>--- | 1 | |
| A | FR 2 777 272 A (SATO KYOKO)<br>15 October 1999 (1999-10-15)<br>* the whole document *<br>--- | 1 | |
| A | FR 2 123 321 A (INOUE JAPAX RES)<br>8 September 1972 (1972-09-08)<br>ESPECIALLY PAGE 8,LINE 29 TO PAGE 9,LINE 30<br>----- | 1 | |
| | | | TECHNICAL FIELDS SEARCHED (Int.Cl.7) |
| | | | C02F |

The present search report has been drawn up for all claims

| Place of search | Date of completion of the search | Examiner |
|---|---|---|
| THE HAGUE | 6 November 2000 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 11 8934

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2000

| Patent document cited in search report | Publication date | Patent family member(s) | Publication date |
|---|---|---|---|
| US 3392102 A | 09-07-1968 | NONE | |
| US 3784014 A | 08-01-1974 | AU 470038 B | 04-03-1976 |
| | | AU 3249371 A | 22-02-1973 |
| | | CA 941531 A | 05-02-1974 |
| | | DE 2150915 A | 20-04-1972 |
| | | ES 394921 A | 01-10-1974 |
| | | FR 2111368 A | 02-06-1972 |
| | | GB 1337496 A | 14-11-1973 |
| | | IT 939084 B | 10-02-1973 |
| | | JP 52037233 B | 21-09-1977 |
| | | US 3716139 A | 13-02-1973 |
| | | ZA 7105458 A | 26-04-1972 |
| | | CA 965710 A | 08-04-1975 |
| FR 2777272 A | 15-10-1999 | NONE | |
| FR 2123321 A | 08-09-1972 | JP 51027631 B | 13-08-1976 |
| | | JP 54016134 B | 20-06-1979 |
| | | DE 2201070 A | 03-08-1972 |
| | | GB 1381351 A | 22-01-1975 |
| | | GB 1381352 A | 22-01-1975 |
| | | IT 957507 B | 20-10-1973 |
| | | US 3846300 A | 05-11-1974 |

EPO FORM P0459

For more details about this annex : see Official Journal of the European Patent Office, No. 12/82